# EUROPÄISCHE PATENTSCHRIFT

(11) **EP 1 026 428 B1**
(45) Veröffentlichungstag und Bekanntmachung des Hinweises auf die Patenterteilung: **11.08.2004**
(21) Anmeldenummer: 99125354.3
(22) Anmeldetag: 20.12.1999
(51) Int. Cl.: F16J 15/32

(54) **Dichtring**
Sealing ring
Bague d'étanchéité

(30) Priorität: 06.02.1999 DE 19904862
(43) Veröffentlichungstag der Anmeldung: 09.08.2000
(73) Patentinhaber: Carl Freudenberg KG, 69469 Weinheim (DE)
(72) Erfinder: Bock, Dr. Eberhard, 69509 Mörlenbach (DE); Tchilingurian, Boris, 52200 Langres (FR); Pataille, Gilbert, 52200 Corlee (FR)

(56) Entgegenhaltungen:
- EP-A- 0 798 498
- EP-A- 0 895 009
- DE-A- 19 539 057

## Beschreibung

### Technisches Gebiet

Die Erfindung betrifft einen Dichtring mit den Merkmalen aus dem Oberbegriff von Anspruch 1.

### Stand der Technik

Ein solcher Dichtring ist aus der DE-OS 33 16 063 bekannt. Der Dichtring ist für ein Drehbewegungen ausführendes Maschinenteil vorgesehen und besteht aus einem Stützring, der flüssigkeitsdicht mit einer Dichtscheibe aus PTFE verbunden ist. Die Dichtscheibe ist trompetenartig entgegen des abzudichtenden Raums verformt und weist hydrodynamisch wirkende Rückförderelemente auf der der abzudichtenden Welle zugewandten Seite auf. Die trompetenartig verformte Dichtscheibe ist mit wenigstens zwei gleichgerichteten und einander durchdringenden Rückförderelementen unterschiedlicher Profiltiefe und/oder Steigung versehen.

Aus EP-A-0 798 498 und DE 195 39 057 A sind Dichtringe bekannt, deren von einer Dichtscheibe aus polymerem Werkstoff gebildeter Dichtabschnitt in Richtung des abzudichtenden Raums vorgewölbt ist, und Rückförderelemente zur Mediumsrückführung in Richtung des abzudichtenden Raums hat.

Der Erfindung liegt die Aufgabe zugrunde, einen Dichtring der eingangs genannten Art derart weiterzuentwickeln, daß der Dichtring eine verbesserte statische Abdichtung bei Stillstand der abzudichtenden Welle aufweist.

Diese Aufgabe wird erfindungsgemäß mit den Merkmalen von Anspruch 1 gelöst. Auf vorteilhafte Ausgestaltungen nehmen die Unteransprüche bezug.

### Darstellung der Erfindung

Zur Lösung der Aufgabe ist es vorgesehen, daß zwischen dem Rückförderelement und der Staublippe ein kreisringförmiger, in sich geschlossener Dichtwulst angeordnet ist, der die Welle umfangsseitig dichtend umschließt.

Bei einer derartigen Ausgestaltung ist von Vorteil, daß der Dichtabschnitt der Dichtscheibe auf der der abzudichtenden Welle zugewandten Seite drei unterschiedlich gestaltete Funktionsbereiche aufweist, wobei durch jeden der Funktionsbereiche jeweils nur eine Aufgabe gelöst wird. Die erste Oberflächenprofilierung bewirkt eine Rückförderung des abzudichtenden Mediums in Richtung des abzudichtenden Raums. Der Dichtwulst umschließt die abzudichtende Welle in sich geschlossen und verhindert dadurch bei Stillstand der Welle eine Leckage des abzudichtenden Mediums in Richtung der Staublippe, d.h. in Richtung der Umgebung. Die Staublippe bewirkt einen Schutz des Dichtwulstes und des Rückförderelements vor abrasiven Verunreinigungen aus der Umgebung, wobei die Staublippe die Oberfläche der abzudichtenden Welle bevorzugt mit einem sehr geringen radialen Abstand im Bereich von maximal 0,5 mm umschließt oder im Spezialfall auch Kontakt zu der Welle haben kann. Die Staublippe weist dadurch keinen Verschleiß und gleichbleibend gute Gebrauchseigenschaften während einer langen Gebrauchsdauer auf.

Das Rückförderelement ist bevorzugt spiralförmig ausgebildet und weist im Längsschnitt betrachtet sägezahnförmige erste Ausnehmungen auf, die einander mit axialem Abstand benachbart zugeordnet sind, wobei die dem abzudichtenden Raum zugewandte erste Begrenzungsfläche einer jeden Ausnehmung mit der abzudichtenden Oberfläche der Welle einen kleineren Winkel einschließt als die dem abzudichtenden Raum abgewandte zweite Begrenzungsfläche. Das sägezahnförmige Profil der ersten Oberflächenprofilierung hat den Vorteil, daß während der bestimmungsgemäßen Verwendung des Radialwellendichtrings abzudichtendes Medium ausgezeichnet in Richtung des abzudichtenden Raums zurückgefördert wird. Durch das im Vergleich zu Einschnitten deutlich größere Volumen der sägezahnförmigen Ausnehmungen, sind diese weniger empfindlich gegen Ölkohle.

Auf der der Welle abgewandten Seite des Rückförderelements ist bevorzugt eine zweite Oberflächenprofilierung angeordnet, die im Längsschnitt durch im wesentlichen U-förmige, auf der der Welle abgewandten Seite offene, umfangsseitig umlaufende zweite Ausnehmungen gebildet ist, die einander mit axialem Abstand benachbart zugeordnet sind. Die sägezahnförmigen Ausnehmungen auf der der Welle zugewandten und die U-förmigen Ausnehmungen auf der der Welle abgewandten Seite der Dichtscheibe bewirken, daß die Dichtscheibe in radialer Richtung sehr flexibel ist und den Bewegungen der abzudichtenden Welle, auch bei Rundlaufabweichungen, zu folgen vermag. Außerdem bewirken die U-förmigen in Verbindung mit den sägezahnförmigen Ausnehmungen eine sehr große Oberfläche, die gut geeignet ist, die entstehende Reibungswärme rasch aus der Dichtscheibe abzuführen.

Bevorzugt besteht die Dichtscheibe aus PTFE. Die Dichtscheibe ist dadurch gegen die meisten abzudichtenden Medien resistent. Außerdem weist PTFE eine gute Temperaturbeständigkeit auf, ebenso wie ein gutes Gleitverhalten. Eine Dichtscheibe aus PTFE ist nahezu verschleißfrei, da nach einem gewissen Anfangsverschleiß die Oberfläche glasiert und dadurch sehr widerstandsfähig wird.

Beispielsweise können spritzgießbare Copolymerisate zur Anwendung gelangen wie FEP (Perfluorethylenpropylen) oder PFA (Perfluoralcoxy Copolymer) oder ein thermoplastisches Elastomer.

Die Dichtscheibe kann jedoch auch aus anderen Werkstoffen bestehen.

Die Dichtscheibe weist bevorzugt eine Dicke von 0,5 bis 1 mm auf. Die Gebrauchseigenschaften sind besonders vorteilhaft, wenn die Dicke 0,6 bis 0,75 mm, je nach Durchmesser der abzudichtenden Welle, beträgt. Ist die Dicke der Dichtscheibe geringer als 0,5 mm ist von Nachteil, daß die Ausnehmungen in ihrer Tiefe reduziert werden müssen und die Dichtscheibe die abzudichtende Welle nur noch mit einer sehr geringen Vorspannung umschließt.

Beträgt die Dicke der Dichtscheibe demgegenüber mehr als 1 mm, ist von Nachteil, daß die Dichtscheibe die Welle mit zu großer Vorspannung anliegend umschließt, wodurch eine sehr große Verlustleistung bedingt ist.

Die sägezahnförmigen und/oder U-förmigen Ausnehmungen sind, falls die Dichtscheibe aus PTFE besteht, bevorzugt ohne Werkstoffentnahme in die Dichtscheibe eingeprägt. Bei spritzgießbaren Copolimerisaten werden die Ausnehmungen im Spritzwerkzeug angebracht. Dadurch, daß die Ausnehmungen unter Vermeidung spanabhebender Bearbeitungsverfahren hergestellt werden, ist von Vorteil, daß die Dichtscheibe auch bei Rundlaufabweichungen der abzudichtenden Welle einer sehr hohen Anzahl von Lastwechseln ohne Beschädigungen standhält, da die Kerbwirkungen im Bereich der Ausnehmungen im Vergleich zu spanabhebenden Bearbeitungsverfahren deutlich reduziert sind.

Die sägezahnförmigen und U-förmigen Ausnehmungen sind einander bevorzugt auf Lücke zugeordnet. Durch eine derartige Ausgestaltung wird einerseits eine annähernd übereinstimmende Materialstärke entlang der axialen Erstreckung der Dichtscheibe bewirkt; unerwünschte Materialanhäufungen, die in fertigungstechnischer Hinsicht und im Hinblick auf gute Gebrauchseigenschaften nachteilig sind, werden durch eine derartige Ausgestaltung vermieden. Andererseits befinden sich die Gelenkpunkte zwischen den sägezahnförmigen Ausnehmungen, so daß die geometrischen Abmessungen der sägezahnförmigen Ausnehmungen auch dann weitgehend erhalten bleiben, wenn die Dichtscheibe zur Abdichtung von unrund laufenden Wellen eingesetzt wird.

Das Verhältnis der radialen Tiefe der U-förmigen Ausnehmungen zur radialen Tiefe der sägezahnförmigen Ausnehmungen kann 1 bis 4,5, bevorzugt 3 betragen. Durch ein derartiges Verhältnis wird ein ausgezeichneter Kompromiß zwischen einer guten Flexibilität der Dichtscheibe in radialer Richtung zum Ausgleich von Rundlaufabweichungen der Welle, guter Abdichtung des ab zudichtenden Mediums während einer langen Gebrauchsdauer und großer Oberfläche zur Kühlung der Dichtscheibe und Abfuhr von Reibungswärme erzielt.

Der Dichtwulst kann - im Längsschnitt betratet - im wesentlichen quadratisch ausgebildet sein. Die axiale Ausdehnung zwischen einander axial benachbarten zweiten Begrenzungsflächen entspricht bevorzugt im wesentlichen der axialen Ausdehnung des Dichtwulstes und der axialen Ausdehnung der Staublippe. Bei einer derartigen Ausgestaltung ist von Vorteil, daß die axiale Breite des Dichtringes optimal gering gehalten werden kann.

Gemäß einer vorteilhaften Ausgestaltung kann es vorgesehen sein, daß der Halteabschnitt durch eine Zwischenschicht aus elastomerem Werkstoff mit dem Stützring verbunden ist. Die Anbindung des Halteabschnitts an der Zwischenschicht kann beispielsweise durch Vulkanisation der beiden Teile miteinander erfolgen. Es hat sich unter wirtschaftlichen Gesichtspunkten als günstg erwiesen, die Zwischenschicht im Zuge eines unmittelbaren Anformvorgangs zu erzeugen und gleichzeitig durch Vulkanisation mit dem Stützring und der Dichtscheibe zu verbinden.

Nach einer anderen Ausgestaltung besteht die Möglichkeit, daß der Halteabschnitt und der Stützring durch ein Spannelement aus zähhartem Werkstoff unmittelbar miteinander verspannt sind. Hierbei ist von Vorteil, daß die Herstellung eines derartigen Dichtrings besonders einfach und daher kostengünstig durchführbar ist. Der Stützring und das Spannelement können beispielsweise jeweils aus einem metallischen Werkstoff bestehen. Durch die nur kraft- und/oder formschlüssige Verbindung des Halteabschnitts zwischen dem Stützring und dem Spannelement ist eine Trennung der Bauteile des Dichtrings im Anschluß an seine Verwendung besonders einfach. Die einzelnen Bauteile können jeweils sortenrein recycelt werden.

Nach einer weiteren Ausgestaltung ist für den Fall großer Schmutzmengen in der Umgebung eine Vliesscheibe vorgesehen.

### Kurzbeschreibung der Zeichnungen

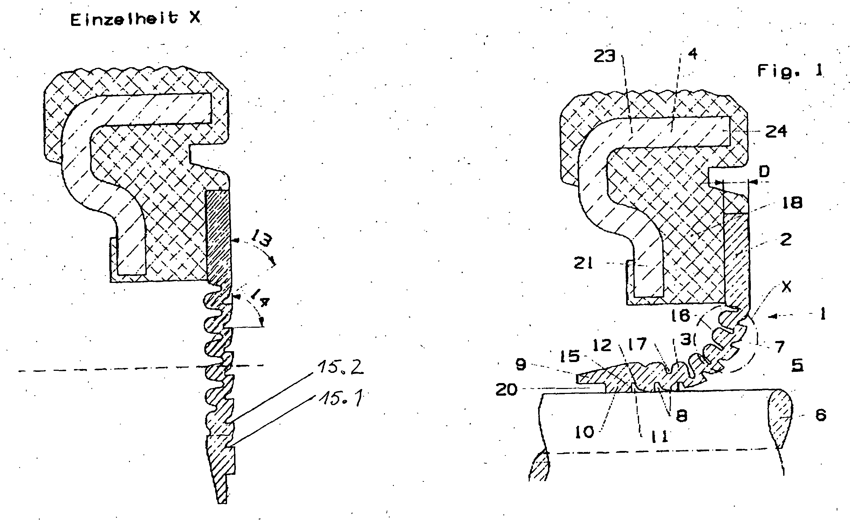

Jeweils ein Ausführungsbeispiel des erfindungsgemäßen Dichtrings wird nachfolgend anhand der schematisch dargestellten Figuren 1 bis 5 näher erläutert.

In den Figuren 1 bis 5 ist jeweils ein Ausführungsbeispiel des erfindungsgemäßen Dichtrings gezeigt, der im wesentlichen aus einer Dichtscheibe 1 und einem Stützring 4 besteht. Die Dichtscheibe 1 besteht in den hier gezeigten Ausführungsbeispielen jeweils aus PTFE und weist einen Halteabschnitt 2 und einen Dichtabschnitt 3 auf. Der Halteabschnitt 2 ist mit dem Stützring 4 verbunden.

Der Dichtabschnitt 3 ist funktionstechnisch dreifach unterteilt und in eingebautem Zustand entgegen eines abzudichtenden Raums 5 vorgewölbt. Der Dichtabschnitt 3 weist auf der der Welle 6 zugewandten Seite eine erste Oberflächenprofilierung 7 auf, die bei Rotation der Welle 6 eine Rückförderung des abzudichtenden Mediums in Richtung des abzudichtenden Raums 5 bewirkt. Die Förderwirkung des abzudichtenden Mediums wird durch das Rückförderelement 8 bewirkt.

Auf der dem abzudichtenden Raum axial abgewandten Seite der ersten Oberflächenprofilierung 7 ist der Dichtwulst 10 angeordnet, der die abzudichtende Welle 6 in sich geschlossen und dichtend umschließt. Auch bei stillstehender Welle ist dadurch eine ausgezeichnete statische Abdichtung gewährleistet.

Auf der dem abzudichtenden Raum 5 abgewandten Seite des Dichtswulst 10 ist die Staublippe 9 angeordnet, die in diesem Ausführungsbeispiel mit der Oberfläche der abzudichtenden Welle 6 einen Dichtspalt 20 von geringer radialer Höhe begrenzt.

Die Vorwölbung des Dichtabschnitts 3 entgegen des abzudichtenden Raums ist besonders in montagetechnischer Hinsicht von hervorzuhebendem Vorteil, da für die Montage des Dichtrings auf eine zuvor montierte Welle weder eine Montagehülse noch eine vorherige Verformung des Dichtabschnitts erforderlich ist. Die Verwendung des zuvor beschriebenen Dichtrings ist daher besonders als Kurbelwellendichtung auf der Schwungradseite und/oder als Nockenwelledichtung vorteilhaft.

In Figur 1 ist ein erstes Ausführungsbeispiel der Dichtscheibe gezeigt. Das Rückförderelement 8 ist spiralförmig ausgebildet und weist - im hier gezeigten Längsschnitt betrachtet - sägezahnförmige erste Ausnehmungen 11 auf. Die sägezahnförmigen ersten Ausnehmungen sind so gestaltet, daß die dem abzudichtenden Raum zugewandte erste Begrenzungsfläche 12 mit der abzudichtenden Oberfläche der Welle 6 einen kleineren Winkel 13 einschließt als die dem abzudichtenden Raum 5 abgewandte zweite Begrenzungsfläche 15. Der kleinere Winkel 13 ist bevorzugt 15° bis 75°, während der größere Winkel 14 etwa 90° beträgt.

Die sägezahnförmigen Ausnehmungen 11 erstrecken sich nur im Bereich des Dichtabschnitts 3 und sind den U-förmigen zweiten Ausnehmungen 17 auf Lücke zugeordnet. Das Verhältnis der radialen Tiefe der U-förmigen zweiten Ausnehmungen 17 zur radialen Tiefe der sägezahnförmigen ersten Ausnehmungen 11 beträgt in diesem Ausführungsbeispiel 3. Durch ein derartiges Verhältnis ist eine gute Flexibilität der Dichtscheibe in radialer Richtung zum Ausgleich von Rundlaufabweichungen der Welle gewährleistet. Außerdem wird durch ein derartiges Profil eine große Oberfläche zur Kühlung der Dichtscheibe und Abfuhr von Reibungswärme erzielt.

Der Halteabschnitt 2 ist in diesem Ausbildungsbeispiel durch eine Zwischenschicht 18, die aus elastomerem Werkstoff besteht, mit dem Stützring 4 verbunden.

Der hier gezeigte Dichtring weist außer den guten Gebrauchseigenschaften geringe Abmessungen in axialer Richtung auf.

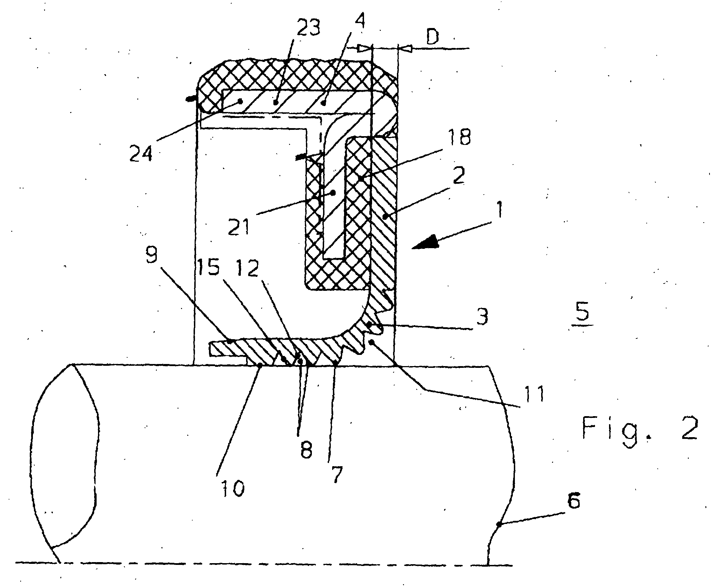

In Figur 2 ist ein zweites Ausführungsbeispiel des erfindungsgemäßen Dichtrings gezeigt. Der hier gezeigte Dichtring unterscheidet sich vom Dichtring aus Figur 1 im wesentlichen dadurch, daß nur auf der der Welle 6 zugewandten Seite des Dichtabschnitts 3 eine erste Oberflächenprofilierung 7 mit ersten Ausnehmungen 11 vorgesehen ist.

Der Stützring 4 ist derart gestaltet und relativ zur Dichtscheibe 1 angeordnet, daß die Dichtscheibe 1 durch den Stützring 4 in ihrem Einbauraum zentriert wird.

Die Verbindung von Dichtscheibe 1 und Stützring 4 erfolgt auch in diesem Beispiel durch eine Zwischenschicht 18 aus elastomerem Werkstoff, die den Radialschenkel 21 vollständig umschließt.

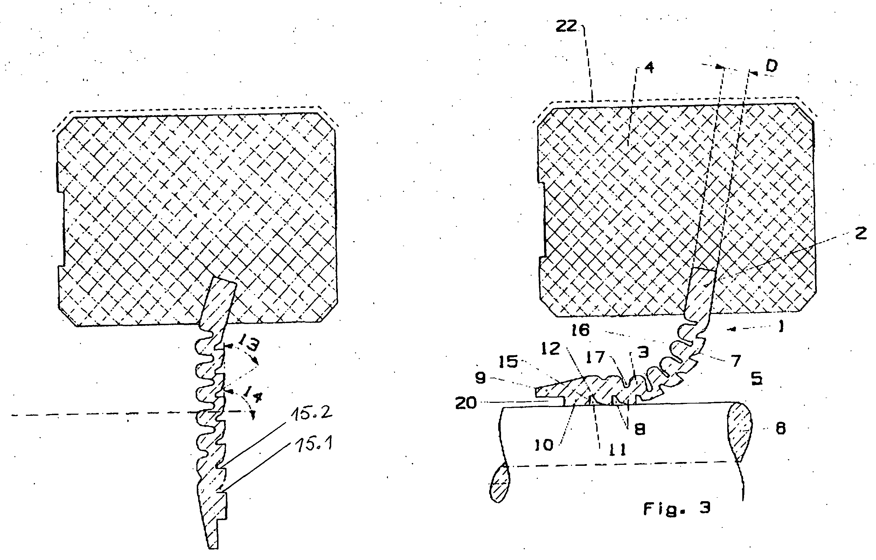

In Figur 3 ist ein drittes Ausführungsbeispiel gezeigt, daß sich von den beiden zuvor beschriebenen Ausführungsbeispielen gemäß der Figuren 1 und 2 dadurch unterscheidet, daß der Stützring 4 nicht aus einem metallischen sondern aus einem polymeren Werkstoff besteht. Zur Abdichtung in einem hier nicht dargestellten Gehäuse kann der Stützring 4 außenumfangsseitig mit einem Dichtlack 22 beschichtet sein.

Der Dichtabschnitt 3 kommt schräg zur Welle 6 aus dem Stützring 4, was die radiale Anpressung auf die Welle 6 positiv beeinflußt.

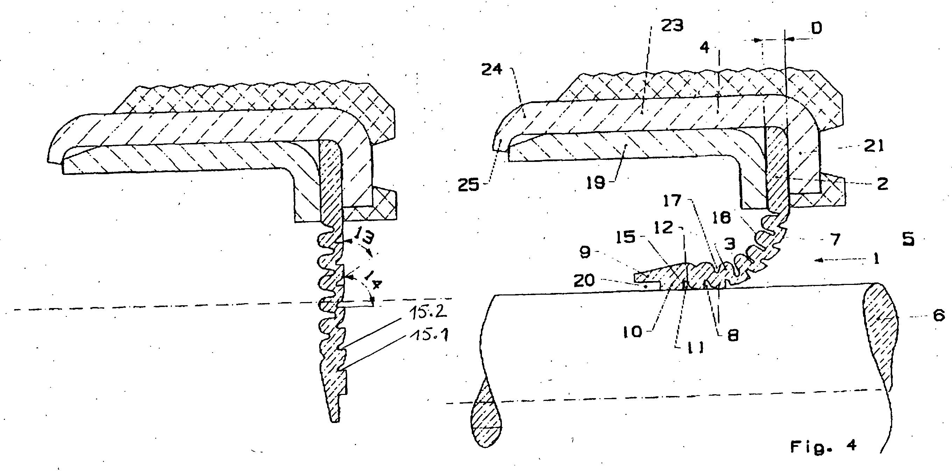

In Figur 4 ist ein viertes Ausführungsbeispiel gezeigt, das sich von den Ausführungsbeispielen aus den Figuren 1 bis 3 im wesentlichen durch die Befestigung der Dichtscheibe 1 am Stützring 4 unterscheidet. In dem hier gezeigten Ausführungsbeispiel ist der Stützring 4 im wesentlichen L-förmig gestaltet, wobei der Axialschenkel 23 auf der dem abzudichtenden Raum 5 abgewandten Stirnseite 24 eine Hinterschneidung 25 aufweist, in die das Spannelement 19 formschlüssig eingeschnappt ist. Das Spannelement 19 preßt den Halteabschnitt 2 unter axialer Vorspannung an den Radialschenkel 21 des Stützrings 4.

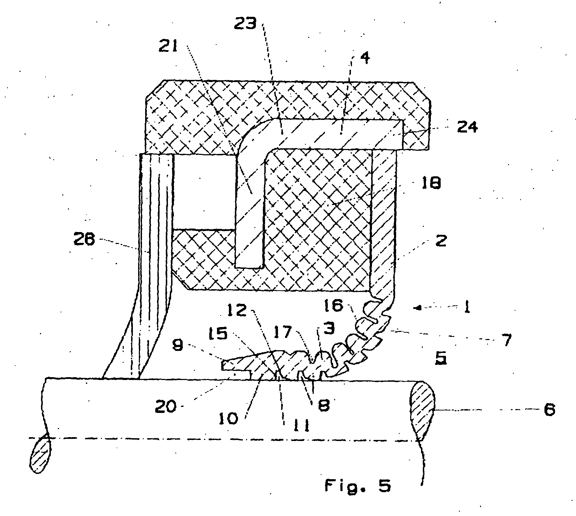

In Figur 5 ist ein weiteres Ausführungsbeispiel gezeigt, das sich von den oben beschriebenen Ausführungsbeispielen im wesentlichen dadurch unterscheidet, daß auf der dem abzudichtenden Raum 5 abgewandten Seite eine Vliesscheibe 26 angebracht ist, die die Welle 6 schmutzabdichtend umschließt.

## Patentansprüche

1. Dichtring, umfassend eine Dichtscheibe (1) aus polymerem Werkstoff, die einen Halteabschnitt (2) und einen Dichtabschnitt (3) aufweist, wobei der Halteabschnitt (2) mit einem Stützring (4) verbunden ist und der Dichtabschnitt (3) entgegen eines abzudichtenden Raums (5) vorgewölbt ist und eine abzudichtende Welle (6) unter radialer Vorspannung umfangsseitig dichtend umschließt, wobei der Dichtabschnitt (3) auf der der Welle (6) zugewandten Seite eine erste Oberflächenprofilierung (7) aufweist, wobei die erste Oberflächenprofilierung (7) auf der dem abzudichtenden Raum (5) zugewandten Seite durch zumindest ein Rückförderelement (8) gebildet ist und wobei auf der dem abzudichtenden Raum (5) abgewandten Seite des Rückförderelements(8) zumindest eine Staublippe (9) angeordnet ist, **dadurch gekennzeichnet, dass** zwischen dem Rückförderelement (8) und der Staublippe (9) ein kreisringförmiger, in sich geschlossener Dichtwust (10) angeordnet ist, der die Welle (6) umfangsseitig dichtend umschließt, die Staublippe (9) auf der dem abzudichtenden Raum (5) abgewandten Seite des Dichtwulstes (10) angeordnet ist und die axiale Ausdehnung zwischen einander axial benachbarten zweiten Begrenzungsflächen (15.1, 15.2) im wesentlichen der axialen Ausdehnung des Dichtwulstes (10) und der axialen Ausdehnung der Staublippe (9) entspricht

2. Dichtring nach Anspruch 1, **dadurch gekennzeichnet, dass** das Rückförderelement (8) spiralförmig ausgebildet ist und im Längsschnitt betrachtet sägezahnförmige erste Ausnehmungen (11) auf weist, die einander mit axialem Abstand benachbart zugeordnet sind und dass die dem abzudichtenden Raum (5) zugewandte erste Begrenzungsfläche (12) einer jeden Ausnehmung (11) mit der abzudichtenden Oberfläche der Welle (6) einen kleineren Winkel (13) einschließt als die dem abzudichtenden Raum (5) abgewandte zweite Begrenzungsfläche (15).

3. Dichtring nach einem der Ansprüche 1 oder 2, **dadurch gekennzeichnet, dass** auf der der Welle (6) abgewandten Seite des Rückförderelements (8) eine zweite Oberflächenprofilierung (16) angeordnet ist, die im Längsschnitt durch im wesentlichen U-förmige auf der der Welle (6) abgewandten Seite offene, umfangsseitige umlaufende zweite Ausnehmungen (17) gebildet ist, die einander mit axialem Abstand benachbart zugeordnet sind.

4. Dichtring nach einem der Ansprüche 1 bis 3, **dadurch gekennzeichnet, dass** die Dichtscheibe (1) aus PTFE besteht.

5. Dichtring nach einem der Ansprüche 1 bis 3, **dadurch gekennzeichnet, dass** die Dichtscheibe aus spritzgießbaren Copolymerisaten besteht.

6. Dichtring nach einem der Ansprüche 1 bis 5, **dadurch gekennzeichnet, dass** die Dichtscheibe (1) eine Dicke D von 0,5 bis 1 mm aufweist.

7. Dichtring nach einem der Ansprüche 1 bis 6, **dadurch gekennzeichnet, dass** die sägezahnförmigen (11) und/oder U-förmigen Ausnehmungen (17) ohne Werkstoffentnahme in die Dichtscheibe (1) eingeprägt sind.

8. Dichtring nach einem der Ansprüche 1 bis 7, **dadurch gekennzeichnet, dass** die sägezahnförmigen (11) und U-förmigen Ausnehmungen (17) einander auf Lücke zugeordnet sind.

9. Dichtring nach einem der Ansprüche 1 bis 8, **dadurch gekennzeichnet, dass** das Verhältnis der radialen Tiefe der U-förmigen Ausnehmungen (17) zur radialen Tiefe der sägezahnförmigen Ausnehmungen (11) 1 bis 4,5 beträgt.

10. Dichtring nach einem der Ansprüche 1 bis 9, **dadurch gekennzeichnet, daß** der Dichtwulst (10) im Längsschnitt betrachtet im wesentlichen quadratisch ausgebildet ist.

11. Dichtring nach einem der Ansprüche 1 bis 10, **dadurch gekennzeichnet, dass** der Halteabschnitt (2) durch eine Zwischenschicht (18) aus elastomerem Werkstoff mit dem Stützring (4) verbunden ist.

12. Dichtring nach einem der Ansprüche 1 bis 10, **dadurch gekennzeichnet, dass** der Halteabschnitt (2) und der Stützring (4) durch ein Spannelement (19) aus zähhartem Werkstoff unmittelbar miteinander verspannt sind.

13. Dichtring nach einem der Ansprüche 1 bis 12, **dadurch gekennzeichnet, daß** der Stützring (4) aus polymerem Werkstoff besteht.

14. Dichtring nach einem der Ansprüche 1 bis 13, **dadurch gekennzeichnet, daß** auf der dem abzudichtenden Raum (5) abgewandten Seite eine Vlisscheibe (26) angeordnet ist, die die Welle (6) schmutzabdichtend umschließt.

## Claims

1. A sealing ring, comprising a sealing disc (1) made of polymeric material, which has a retaining portion (2) and a sealing portion (3), the retaining portion (2) being connected to a supporting ring (4) and the sealing portion (3) being pre-curved convexly towards a space (5) to be sealed off, and a shaft (6) to be sealed off being circumferentially enclosed in a sealing manner under radial prestress, the sealing portion (3) having a first surface profiling (7) on the side facing the shaft (6), the first surface profiling (7), on the side facing the space (5) to be sealed off. being formed by at least one return element (8), and at least one dust lip (9) being arranged on the side of the return element (8) facing away from the space (5) to be sealed off, **characterized in that** an annular, continuous sealing bead (10), which circumferentially encloses the shaft (6) in a sealing manner, is arranged between the return element (8) and the dust lip (9), the dust lip (9) is arranged on the side of the sealing bead (10) facing away from the space (5) to be sealed off, and the axial extent between axially adjacent second bounding surfaces (15.1, 15.2) substantially corresponds to the axial extent of the sealing bead (10) and the axial extent of the dust lip (9).

2. A sealing ring according to claim 1, **characterized in that** the return element (8) is spirally formed and, when viewed in longitudinal section, has sawtooth-shaped first recesses (11), which are assigned to one another adjacently with an axial spacing,and **in that** the first bounding surface (12) of each recess (11), facing the space (5) to be sealed off, forms with the surface of the shaft (6) to be sealed off a smaller angle (13) than the second bounding surface (15), facing away from the space (5) to be sealed off.

3. A sealing ring according to either one of claims. 1 and 2, **characterized in that** arranged on the side of the return element (8) facing away from the shaft (6) is a second surface profiling (16), which is formed in longitudinal section by substantially U-shaped circumferential second recesses (17), which are open on the side facing away from the shaft (6), run around the periphery and are assigned to one another adjacently with an axial spacing.

4. A sealing ring according to any one of claims 1 to 3, **characterized in that** the sealing disc (1) consists of PTFE.

5. A sealing ring according to any one of claims 1 to 3, **characterized in that** the sealing disc consists of injection-mouldable copolymers.

6. A sealing ring according to any one of claims 1 to 5, **characterized in that** the sealing disc (1) has a thickness D of from 0.5 to 1 mm.

7. A sealing ring according to any one of claims 1 to 6, **characterized in that** the sawtooth-shaped recesses (11) and/or U-shaped recesses (17) are stamped into the sealing disc (1) without removal of material.

8. A sealing ring according to any one of claims 1 to 7, **characterized in that** the sawtooth-shaped recesses (11) and U-shaped recesses (17) are assigned to one another in a staggered arrangement.

9. A sealing ring according to any one of claims 1 to 8, **characterized in that** the ratio of the radial depth of the U-shaped recesses (17) to the radial depth of the sawtooth-shaped recesses (11) is 1 to 4.5.

10. A sealing ring according to any one of claims 1 to 9, **characterized in that** the sealing bead (10), when viewed in longitudinal section, is formed in a substantially square manner.

11. A sealing ring according to any one of claims 1 to 10, **characterized in that** the retaining portion (2) is connected to the supporting ring (4) by an intermediate layer (18) of elastomeric material.

12. A sealing ring according to any one of claims 1 to 10, **characterized in that** the retaining portion (2) and the supporting ring (4) are clamped together directly by a clamping element (19) made of tough material.

13. A sealing ring according to any one of claims 1 to 12, **characterized in that** the supporting ring (4) consists of polymeric material.

14. A sealing ring according to any one of claims 1 to 13, **characterized in that** a nonwoven disc (26) which encloses the shaft (6) in a manner sealing it off from dirt is arranged on the side facing away from the space (5) to be sealed off.

## Revendications

1. Bague d'étanchéité comprenant une rondelle d'étanchéité (1) en matière polymère comprenant un segment de maintien (2) et un segment d'étanchéité (3), le segment de maintien (2) étant relié à une bague de support (4) et le segment d'étanchéité (3) présentant une courbure vers un espace à rendre étanche (5) et entourant un arbre à étanchéifier (6) de manière étanche sur sa circonférence sous l'effet d'une précontrainte radiale, le segment d'étanchéité (3) étant pourvu d'un premier profilage superficiel (7) sur son côté tourné vers l'arbre (6), le premier profilage superficiel (7) étant formé par au moins un élément de refoulement (8) sur le côté tourné vers l'espace à rendre étanche (5) et au moins une lèvre étanche à la poussière (9) étant située sur le côté de l'élément de refoulement (8) éloigné de l'espace à rendre étanche (5), **caractérisée en ce qu'**un bourrelet d'étanchéité (10) autonome de forme annulaire est situé entre l'élément de refoulement (8) et la lèvre étanche à la poussière (9), lequel bourrelet entoure l'arbre (6) de manière étanche sur sa circonférence, la lèvre étanche à la poussière (9) est située sur le côté du bourrelet d'étanchéité (10) éloigné de l'espace à rendre étanche (5) et l'étendue axiale entre des secondes surfaces de limitation (15.1, 15.2) voisines l'une de l'autre dans la direction axiale correspond essentiellement à l'étendue axiale du bourrelet d'étanchéité (10) et à l'étendue axiale de la lèvre étanche à la poussière (9).

2. Bague d'étanchéité selon la revendication 1, **caractérisée en ce que** l'élément de refoulement (8) est exécuté de manière à avoir une forme en spirale et est pourvu, si on considère sa section longitudinale, de premiers évidements (11) en dents de scie qui sont conjugués voisins à une distance axiale les uns des autres, et **en ce que** la première surface de limitation (12), située sur le côté de l'espace à rendre étanche (5), de chacun de ces évidements (11) forme avec la surface à étanchéifier de l'arbre (6) un angle (13) plus petit que la seconde surface de limitation (15) éloignée de l'espace à rendre étanche (5).

3. Bague d'étanchéité selon l'une des revendications 1 ou 2, **caractérisée en ce qu'**un second profilage superficiel (16) est situé sur le côté de l'élément de refoulement (8) éloigné de l'arbre (6), lequel profilage est formé, si on considère sa section longitudinale, par des seconds évidements (17) ayant essentiellement une forme en U et ouverts sur le côté éloigné de l'arbre (6) qui s'étendent sur sa circonférence et qui sont conjugués voisins à une distance axiale les uns des autres.

4. Bague d'étanchéité selon l'une des revendications 1 à 3, **caractérisée en ce que** la rondelle d'étanchéité (1) est en PTFE.

5. Bague d'étanchéité selon l'une des revendications 1 à 3, **caractérisée en ce que** la rondelle d'étanchéité est formée de copolymérisats pouvant être moulés par injection.

6. Bague d'étanchéité selon l'une des revendications 1 à 5, **caractérisée en ce que** la rondelle d'étanchéité (1) a une épaisseur D comprise entre 0,5 et 1 mm.

7. Bague d'étanchéité selon l'une des revendications 1 à 6, **caractérisée en ce que** les évidements en dents de scie (11) et/ou en forme de U (17) sont imprimés dans la rondelle d'étanchéité (1) sans enlèvement de matériau.

8. Bague d'étanchéité selon l'une des revendications 1 à 7, **caractérisée en ce que** les évidements en dents de scie (11) et en forme de U (17) sont disposés en décalage les uns par rapport aux autres.

9. Bague d'étanchéité selon l'une des revendications 1 à 8, **caractérisée en ce que** le rapport entre la profondeur radiale des évidements en forme de U (17) et la profondeur radiale des évidements en dents de scie (11) est compris entre 1 et 4,5.

10. Bague d'étanchéité selon l'une des revendications 1 à 9, **caractérisée en ce que** le bourrelet d'étanchéité (10) est exécuté de manière à être essentiellement carré, si on considère sa section longitudinale.

11. Bague d'étanchéité selon l'une des revendications 1 à 10, **caractérisée en ce que** le segment de maintien (2) est relié à la bague de support (4) par une couche intermédiaire (18) formée d'un matériau élastomère.

12. Bague d'étanchéité selon l'une des revendications 1 à 10, **caractérisée en ce que** le segment de maintien (2) et la bague de support (4) sont directement mis en contrainte l'un avec l'autre grâce à un élément de serrage (19) formé d'un matériau d'une dureté coriace.

13. Bague d'étanchéité selon l'une des revendications 1 à 12, **caractérisée en ce que** la bague de support (4) est formée d'un matériau polymère.

14. Bague d'étanchéité selon l'une des revendications 1 à 13, **caractérisée en ce qu'**une rondelle de non-tissé (26) qui entoure l'arbre (6) de manière à l'étanchéifier vis-à-vis de la salissure est située sur le côté éloigné de l'espace à rendre étanche (5).
